(19) Europäisches Patentamt

European Patent Office

Office européen des brevets

(11) **EP 1 655 698 A1**

(12) **EUROPEAN PATENT APPLICATION**

(43) Date of publication:
**10.05.2006 Bulletin 2006/19**

(51) Int Cl.:
***G06T 3/00*** *(2006.01)*

(21) Application number: **05023418.6**

(22) Date of filing: **26.10.2005**

| | |
|---|---|
| (84) Designated Contracting States: **AT BE BG CH CY CZ DE DK EE ES FI FR GB GR HU IE IS IT LI LT LU LV MC NL PL PT RO SE SI SK TR** Designated Extension States: **AL BA HR MK YU** | (71) Applicant: **AISIN SEIKI KABUSHIKI KAISHA Kariya-shi, Aichi-ken 448-8650 (JP)** |
| (30) Priority: **28.10.2004 JP 2004313424** | (72) Inventor: **Kakinami, Toshiaki Kariya-shi Aichi-ken 448-8650 (JP)** (74) Representative: **TBK-Patent Bavariaring 4-6 80336 München (DE)** |

(54) **Image processing method and image processing device**

(57)    An image processing method processes a captured image, which is captured by a capturing means (VD, CM), characterized in that the image processing method comprises an image processing process (VA) for generating a corrected captured image by correcting a distortion appearing within the captured image by use of a MMF model.

# FIG. 1

**Description**

FIELD OF THE INVENTION

This invention generally relates to an image processing method and an image processing device for processing an image, which is captured by a camera for the like having a distorted lens. Specifically, the image processing method and an image processing device correct a distortion in the image.

BACKGROUND

Because a wide-angle lens is generally distorted, an image of objects captured by a camera through the wide-angle lens is also distorted, and such image needs to be processed by correcting the distortion in order to comprehend the objects correctly. Various kinds of devices, which can monitor a rear view and a side view of a vehicle and can display these views as an image in a compartment of the vehicle, have been placed on the market. In case that a camera of such device captures an image through the wide-angle lends, the captured image is distorted, and such distortion needs to be somehow dealt with. For example, a parking assist device, such as so-called a back guide monitor, which has been placed on the market and used in order to assist the parking operation, can estimates an estimated locus of a vehicle and superpose it on a captured image, which is captured by a camera. Further, the parking assist device can displays the estimated locus in the image by a displaying device. In this operation, a position and a shape of the estimated locus of the vehicle, which is displayed on the displaying device, is intentionally distorted in accordance with a distortion characteristic of the lens in order to reduce computer load.

In JP64-14700A, an estimated locus displaying device is disclosed. Specifically, in pages 3 and 4 and Fig. 10 of JP64-14700A, a method for correcting a normal image, which is captured by a camera having a normal lens, so as to be a fisheye-style image, is proposed.

Further, in JP2001-158313A, a method for correcting an estimated locus, which is used for assisting a parking operation. Specifically, JP2001-158313A discloses that an estimated locus correcting means for correcting the estimated locus is provided, and data to be displayed is prepared on the basis of the corrected estimated locus. Further, according to the JP2001-158313A, the estimated locus correcting means corrects the estimated locus in order to obtain the corrected estimated locus by compressing the estimated locus at a predetermined ratio so as to be in an oval shape relative to a traveling direction of the vehicle.

Furthermore, the estimated locus correcting means moves in parallel the estimated locus in a backward direction of the traveling direction of the vehicle in order to obtain a corrected estimated locus. However, the estimated locus correcting means does not corrected a radial distortion, which is distorted when the image is captured by a wide-angle lens, in a manner where a scale at a optical center of the image differs from a scale at a certain point positioned in a radial direction relative to the optical center.

In Non-patent Document 1, a model for correcting such radial distortion is disclosed. In Non-patent Document 2, a model of a camera having a distorted lens is disclosed. Such distorted lenses is also disclosed in document, Slama, C.C. ed "Manual of Photgrammetry, 4th edition, American Society of Photogrammetry (1980) ".

In Non-patent Document 3, another model of a camera having a distorted lens is disclosed. Such distorted lens is also disclosed in the above "Manual of Photogrammetry (1980)". In Non-patent Document 4, Taylor expansion whose function is "n", in other words, a method of approximation using a polynomial, has been disclosed as a distortion correction function.

According to a curve model, in Non-patent Document 5, a MMF model (Morgan-Mercer-Flodin model), which comes from acronym for Morgan, Mercer and Flodin, is described.

Non-patent Document 1: Zhengyou Zhang "A Flexible New Technique for Camera Calibration", Microsoft Research Technical Report, MRS-TR-98-71, USA, December, 1998, P7 (first non-patent document).

Non-patent Document 2: Gideon P. Stein Martin "Internal Camera Calibration Using Rotation and Geometric Shapes", Master's thesis published as AITR-1426. Chanuka 97/98, P13 (second non-patent document)

Non-patent Document 3: Roger Y. Tsai "An Efficient and Accurate Camera

Calibration Technique for 3D Machine Vision", Proceedings of IEEE Conference on Computer Vision and Pattern Recognition, Miami Beach, FL, USA, 1986, P364-374.

Non-patent Document 4: Richard Hartley and Andrew Zisserman "Multiple View Geometry in Computer Vision", Cambridge University Press., UK, August, 2000, P178-182.

Non-patent Document 5: Paul H. Morgan, L. Preston Mercer and Nestor W. Flodin "General model for nutritional responses of higher organisms", Proceedings of National Academy of Sciences, USA Vol.72, No. 11, November 1975, P4327-4331.

In JP64-14700A, the distortion characteristics of the wide-angle lens is modeled by use of an exponential function; however, it is not mentioned that the method for accurately correcting a characteristic of an aspherical lens.

Further, in JP2001-158313A, because the correction of a radial distortion caused by the use of the wide-angle lens is not considered, the estimated locus superposed on the captured image, which is captured by a camera and displayed on a displaying device, may not be identical to an actual estimated locus. Furthermore, in both JP64-14700A and JP2001-158313A, a means for accurately correcting the distortion in the image, on the basis of the distortion characteristics of the lens, has not been disclosed.

In Non-patent documents 1 through 3, the distortion characteristic is modeled by use of fourth order polynomial. In such configuration, when an image is captured by the lens whose view angle is not so wide, the distortion in the image can be corrected to a degree that is problem-free, however, when an image is captured by a wide-angle lens, the distortion in the image cannot be corrected sufficiently by means of a polynomial approximation. Further, as described in Non-patent document 4, even when the order number of the polynomial approximation has been increased, accuracy in the approximation may not be obtained.

The distortion characteristics in the image has been mostly approximated by use of curves of polynomial whose order is two through four, however, because the camera, which is applied to, for example the parking assist device, generally employs the wide-angle lens; edge portions in the image cannot be corrected accurately. As a result, the estimated locus cannot be identical with the captured image. Further, when a driving lane or obstacles, which indicates an environmental status in the captured image captured by the wide-angle lens, are detected by processing the captured image, the distortion in the captured image needs to be corrected with high accuracy. Furthermore, considering the possibility in which a level of the calculating ability of the computer is enhanced, it is possible that the distortion can be removed directly from the input image in order to display an image without distortion.

A need thus exists to provide an image processing method and an image processing device that can correct a distortion in an image, which is captured by a capturing means, such as a camera, having a distorted lens.


SUMMARY OF THE INVENTION

According to an aspect of the present invention, an image processing method processes a captured image, which is captured by a capturing means (VD, CM), characterized in that the image processing method comprises an image processing process (VA) for generating a corrected captured image by correcting a distortion appearing within the captured image by use of a MMF model.

Thus, because the image processing method corrects the distortion in the image, which is captured by the capturing means, by use of the MMF model; the image processing such as the correction of the distortion can be appropriately conducted. For example, even when the image is captured by the capturing means such as a camera having a wide-angle lens, the distortion in the image can be appropriately corrected.

According to an aspect of the present invention, an image processing device processes a captured image captured by a capturing means (VD) (CM), characterized in that the image processing device comprises an image processing means (VA) for generating a corrected captured image by correcting a distortion appearing within the captured image by use of a MMF model.

Thus, because the image processing method of the image processing device corrects the distortion in the image, which is captured by the capturing means, by use of the MMF model; the image processing such as the correction of the distortion can be appropriately conducted. For example, even when the image is captured by the capturing means such as a camera having a wide-angle lens, the distortion in the image can be appropriately corrected.


BRIEF DESCRIPTION OF THE DRAWINGS

The foregoing and additional features and characteristics of the present invention will become more apparent from the following detailed description considered with reference to the accompanying drawings, wherein:

Fig.1 illustrates a block diagram indicating an example of a main configuration of an image processing device according to the embodiment;
Fig.2 illustrates a block diagram indicating another example of a main configuration of an image processing device according to the embodiment;
Fig.3 illustrates a block diagram indicating an example in which the image processing device is applied to a road driving lane device;
Fig.4 illustrates a front view indicating an example of an undistorted image according to the image processing;
Fig.5 illustrates a front view indication an example of a distorted image according to the image processing;
Fig.6 illustrates an explanation diagram indicating a relationship between a distance from a optical center and certain points (point A, point B) in each of a undistorted image and a distorted image;
Fig.7 illustrates a graph indicating an example of a characteristic when a wide-angle lens design data formula is approximated by fourth order polynomial;

Fig.8 illustrates a graph indicating an example of a characteristic when a wide-angle lens design data formula is approximated by tenth order polynomial;

Fig.9 illustrates a graph indicating residuals when a wide-angle lens design data formula is approximated by tenth order polynomial;

Fig.10 illustrates a graph indicating an example of a characteristic when the distortion correcting is conducted on the wide-angle lens design data formula by use of MMF model;

Fig.11 illustrates a graph indicating an example of residuals when the distortion correcting is conducted on the wide-angle lens design data formula by use of MMF model;

Fig.12 illustrates a graph indicating an example when a MMF model is applied to the calibration chart having a tetragonal lattice pattern in a known size;

Fig.13 illustrates a graph indicating an example when a polynomial model is applied to the calibration chart having a tetragonal lattice pattern in the known size;

Fig. 14 illustrates a front view indicating an example of the corrected image by means of the MMF model;

Fig.15 illustrates a front view indicating an example of the corrected image by means of a polynomial approximation;

Fig.16A illustrates a distorted image of a tetragonal shaped test form;

Fig.16B illustrates an ideal image of a tetragonal shaped test form;

Fig.17 illustrates a diagram indicating lattice points of the distorted image;

Fig. 18 illustrates a diagram indicating a lattice points of the ideal image; and

Fig.19 illustrates an estimated locus distorted in accordance with the captured image.

## DETAILED DESCRIPTION

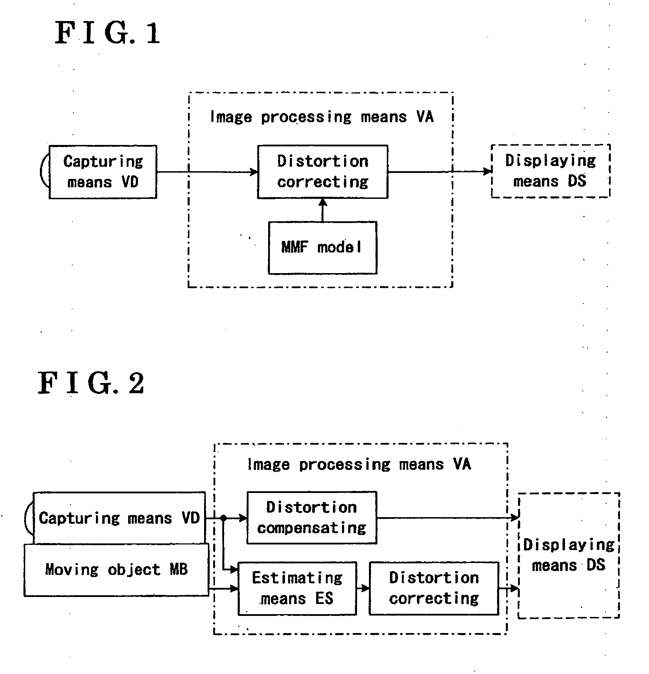

An embodiment, in which the image processing method and the image processing device according to the present invention are applied, will be explained in accordance with the attached drawings. The image processing device illustrated in Fig.1 includes an image processing means VA for generating a corrected captured image by use of a MMF model a captured image that is captured by the capturing means VD, and a displaying means DS for displaying an image which is captured by the capturing means VD and an image (corrected capture image) which the distortion of the capture image is corrected by use of the MMF model. However, the corrected captured image may be uses at a next process without displaying at the displaying means DS. The word "MMF model" comes from acronym for inventors of Morgan, Mercer and Flodin. The MMF model has been quoted in various documents, such as Non-patent document 5 described above, and also has been publicly known. The capturing means includes a camera having a distorted lens, and the captured image includes an image captured by the camera. Further, the distorted lens includes, for example, a wide-angle lens, and the capturing means VD includes, for example, a camera having the wide-angle lens.

As shown in Fig.2, the image processing means VA may corrects an estimated image (e.g. an estimated locus EL of a movable body MB) by use of the MMF model and superimposed on a background image appearing within the captured image, which captured by the capturing means VD. Such image is displayed by the displaying means DS. Further, the image processing means VA may corrects an estimated image by use of the MMF model and superimposed on an object image indicating the environmental status, which appears within the captured image captured by the capturing means VD. Such image is displayed by the displaying means DS. "The object indicating the environmental status" represents an object to be detected, such as a driving lane or an obstacle, shown in the background image (scene image) captured by the capturing means.

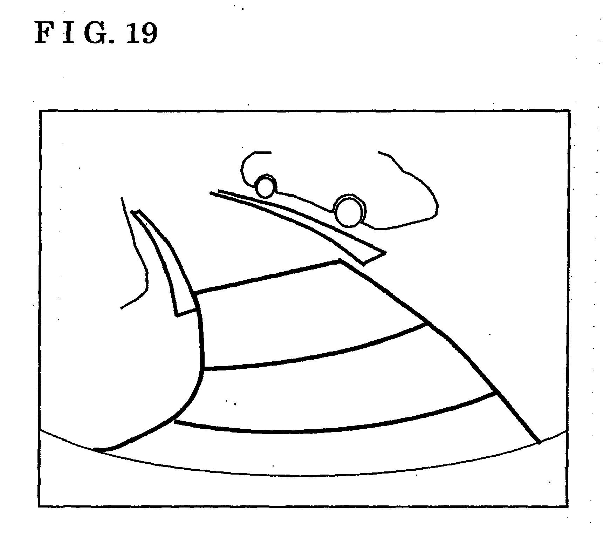

According to the image processing device illustrated in Fig.2, the capturing means VD is mounted on a movable body MB, and the image processing means VA includes an estimating means ES for generating an estimated locus EL of the movable body MB on the basis of an image captured by the capturing means VD. The estimated locus EL of the movable body represents an estimated locus EL that the movable body MB will be moved in a moving direction. The image processing means VA may corrects a geometrical shape, which generates the estimated locus EL estimated by the estimating means ES, by use of the MMF model, and the corrected estimated locus EL may be displayed on the displaying means DS. "The geometrical shape" represents a geometrical shape that includes a displayed position and a shape of the estimated locus EL The geometrical shape is used in order to display the estimated locus EL. Fig.19 illustrates the estimated locus EL, which is corrected to be distorted in accordance with the captured image, and displayed by the displaying means DS.

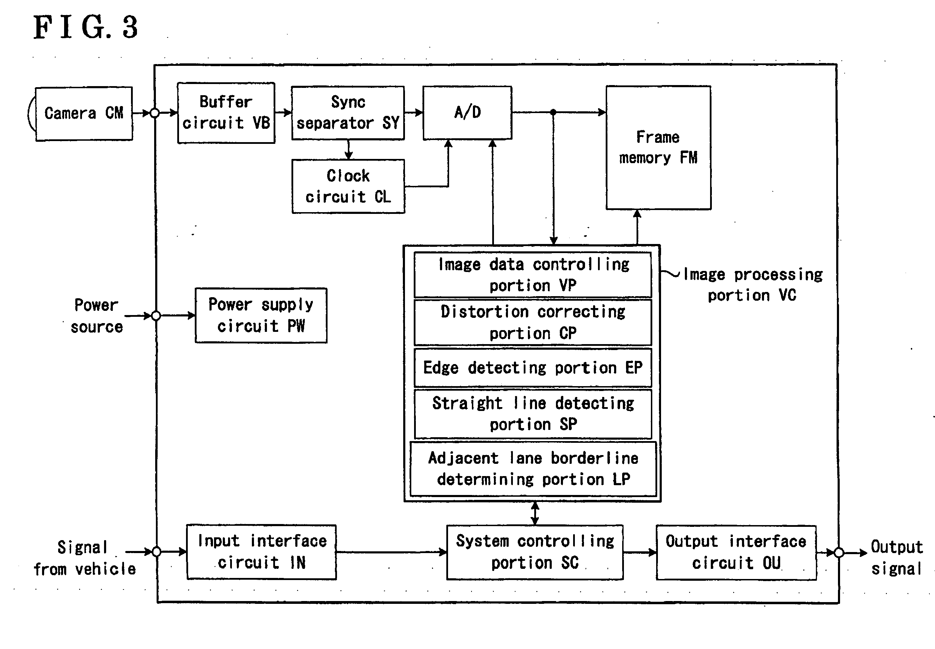

Fig.3 illustrates another example in which the image processing device is applied to a detector for driving lane on road surface. Specifically, a CCD camera (hereinafter referred to as a camera CM) serving as a capturing means VD is attached to a front portion of a vehicle (not shown) in order to continuously capture a front view of the vehicle, including the road surface. The image signals from the camera CM is transmitted to a video input buffer circuit VB, and then transmitted to a sync separator SY. Further, the signals are converted from analog into digital and stored in the frame memory FM. The image data stored in the frame memory FM is processed in an image processing portion VC, and the image processing portion VC includes an image data controlling portion VP, a distortion correcting portion CP, an edge detecting portion EP, a straight line detecting portion SP and an adjacent lane borderline determining portion LP.

From the image processing portion VC, data that is addressed by the image data controlling portion VP is read and transmitted to the distortion correcting portion CP. In the distortion correcting portion CP, the data is corrected. Further, in the edge detecting portion EP, an edge is detected by means of, for example, a sobel operator, from the corrected image, and then coordinates of edge points in the image is extracted, the edge points corresponding to a border line of a white line on the road surface. At the straight line detecting portion SP, straight line data is detected from the group of the edge points by applying a straight line to the edge points. On the basis of the detected straight line data, in the adjacent lane borderline determining portion LP, a probable straight line that can be assumed as a position of the border of the lane is selected on the basis of a distance between the positions of the line and a physical relationship between the line and the vehicle, and such probable straight line is recognized as a road borderline, and thus, a driving lane borderline can be specified. The driving lane borderline includes not only that of the while line but also that of a guardrail or the like.

In accordance with a detected result such as a width of the driving lane, a curvature of the road or the posture of the driver, an output from the adjacent lane borderline determining portion LP is transmitted to a system controlling portion SC (computer), and then the output is further transmitted to an external system device (not shown) by means of the output interface circuit OU. In Fig.3, CL indicates a clock circuit, PW indicate a power supply circuit and IN indicates an input interface circuit.

As mentioned above, in the image captured by the actual camera lens (not shown). the more an object is captured at apart from the optical center of the image, the more the size of the image of the object becomes small. Such distortion needs to be corrected accurately in order to detect the straight line and the curve correctly. Thus, in this embodiment, the distortion in the image can be corrected in the distortion correcting portion CP, shown in Fig.3, as follows.

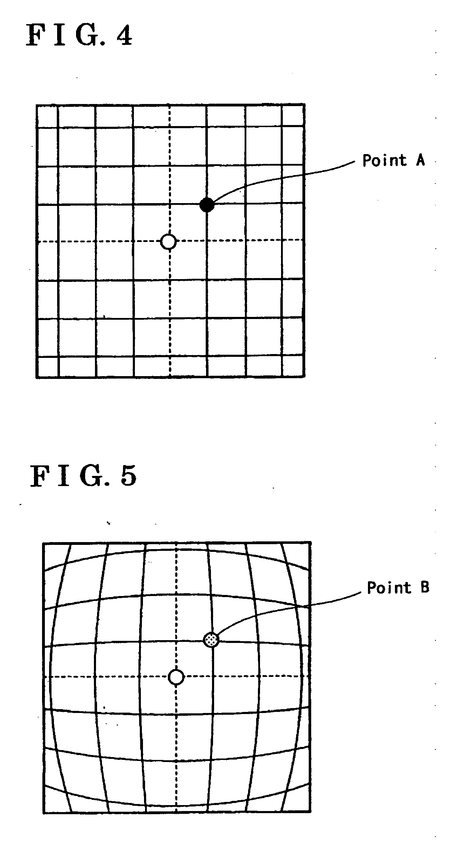

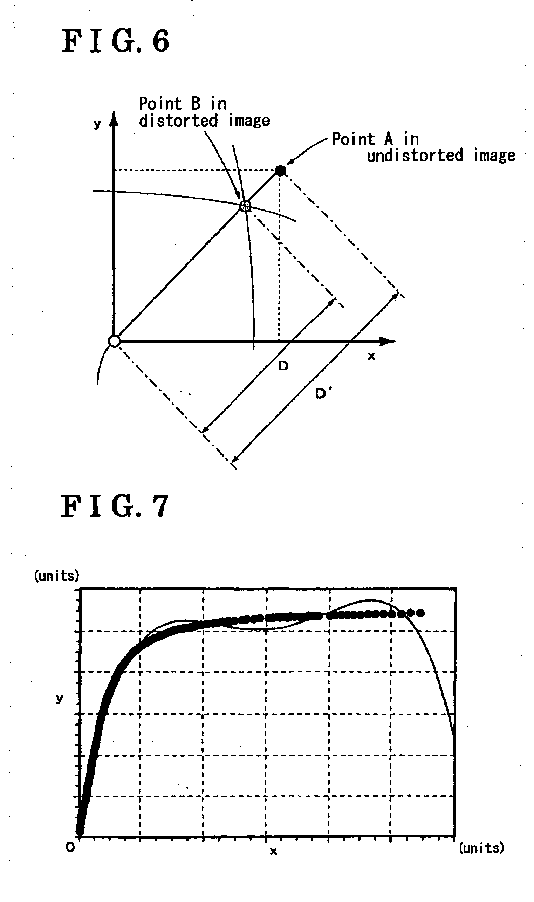

An image that is not distorted is shown in Fig.4, and an image that is distorted is shown in Fig.5. A relationship between them, in other words, a characteristic of the distorted image can be described as follows. Assuming that an optical center is a principal point, (white points in Fig.4 and Fig.5), and in Fig.6, a point of the object in the undistorted image (Fig.4) is indicated by a point A, and a point of the object in the distorted image (Fig.5) is indicated by a point B. Further, in Fig.6, a distance between the optical center and the point A is indicated by a distance D' and a distance between the optical center and the point B is indicated by a distance D. Generally a relationship between the distance D' and the distance D can be explained by some sort of a model formula.

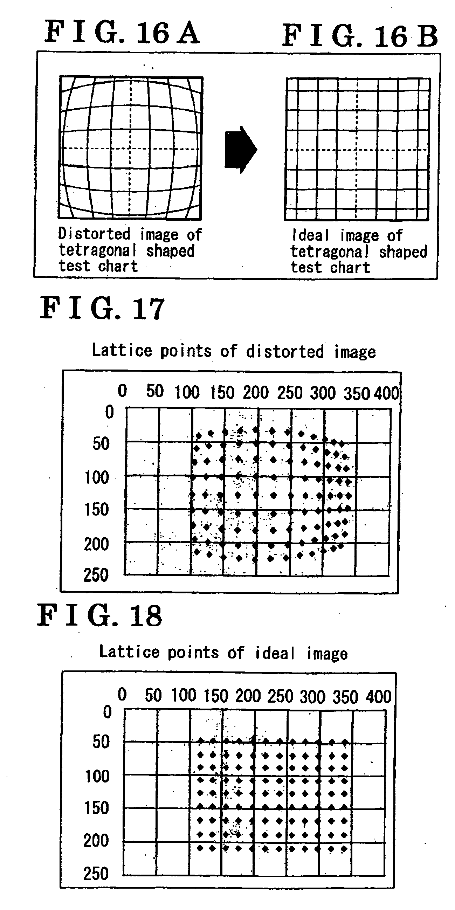

For example, according to Non-patent documents 1 through 4, the distortion characteristic is corrected by means of a polynomial approximation. When a test chart formed in a tetragonal lattice pattern is captured, a distorted image as shown in Fig.16A can be generally obtained. Fig.16B illustrates an ideal image in which a space between each line is equal. The lines in the ideal image are formed in a tetragonal lattice pattern that is similar to the tetragonal lattice pattern in the test chart. In the distorted image shown in Fig.16A, the more a part of the image at a point is located apart from the optical center of the image, in other words a optical center of the lens, the more the part of the image is distorted. Supposing that the distortion in the image is symmetrical relative to the optical center of the lens within the entire image, a relationship between a distance D and a distance D' can indicated by the formula 1, the distance D indicating a distance between the optical center of the lens $(x_0, y_0)$ and an optional pixcel $(x, y)$ in the distorted image, and the distance D' indicating a distance between the optical center of the lens $(x_0, y_0)$ and an optional pixcel $(X, Y)$, which corresponds to the pixcel $(x, y)$, in the ideal image.

$$D' = D + \delta D = D + a \cdot D + b \cdot D^2 + c \cdot D^3 + d \cdot D^4 \quad \text{(Formula 1)}$$

$$D = \sqrt{(x - x_0)^2 + (y - y_0)^2}$$

$$D' = \sqrt{(X - X_0)^2 + (Y - Y_0)^2}$$

, wherein D indicates a height of an actual image, specifically a distance between the optical center of the lens $(x_0, y_0)$ and an optional pixcel $(x, y)$ in the distorted image; D' indicates a height of an ideal image, specifically a distance between the optical center of the lens $(X_0, X_0)$ and an optional pixcel $(X, Y)$, which corresponds to the pixcel $(x, y)$, in the actual image; $\delta D$ indicates an amount of the distortion.

The distortion correcting coefficient can be obtained as follows. First, a coordinate of the lattice point in the distorted image of the test chart is measured in order to obtain the height $D$ in the actual image. Second, the height $D'$ in the ideal image is set by a predetermined scale multiplication of the height $D$. Then, the coordinates of the lattice points in the distorted image is graphed as shown in Fig.17, and the coordinates of the lattice point in the ideal image is also graphed as shown in Fig.18. Further, the obtained distances $D$ and $D'$ are substitute into the formula 1, and the above fourth order polynomial is approximated by use of a least mean square, as a result, the distortion correcting coefficients a, b, c and d can be obtained.

As mentioned above, when an image is captured by the lens whose view angle is not so wide, the distortion in the image can be corrected by means of polynomial approximation, however, when an image is captured by a wide-angle lens, the distortion in the image cannot be corrected sufficiency by means of polynomial approximation.

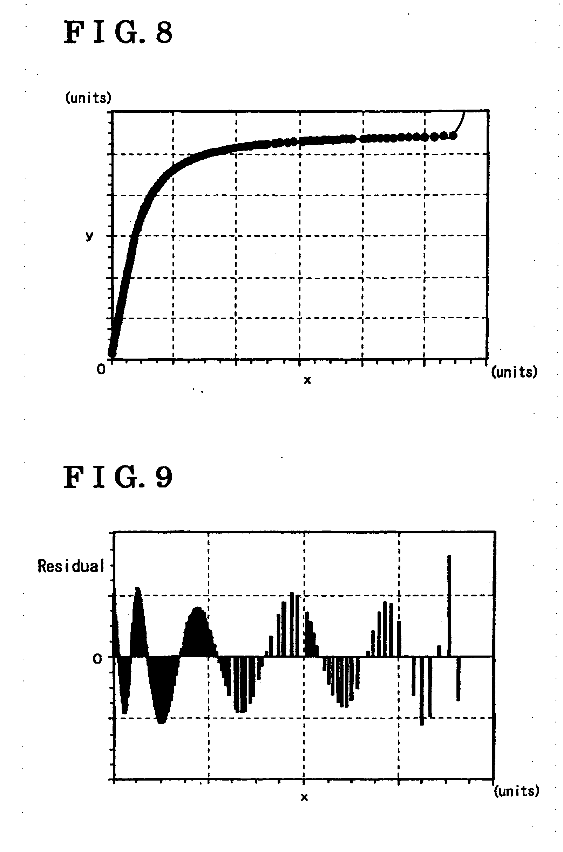

Fig.7 and Fig.8 indicate results of polynomial approximation on the wide-angle lens design data formula. Specifically, Fig.4 illustrates a result in which the wide-angle lens design data formula is approximated by means of fourth order polynomial, and Fig.8 illustrates a result in which the wide-angle lens design data formula is approximated by means of tenth order polynomial.

The order of the polynomial may be increased in order to reduce the errors upon the polynomial approximation. However, as shown in Fig.9, which illustrates an enlarged view of the wide-angle lens design data formula that is approximated by means of tenth polynomial, the level of the residuals between the real value and an approximated curve is still high and also indicating a wave form. Thus, even when the order of the polynomial is raised from fourth to tenth, it is still difficult to reduce the errors.

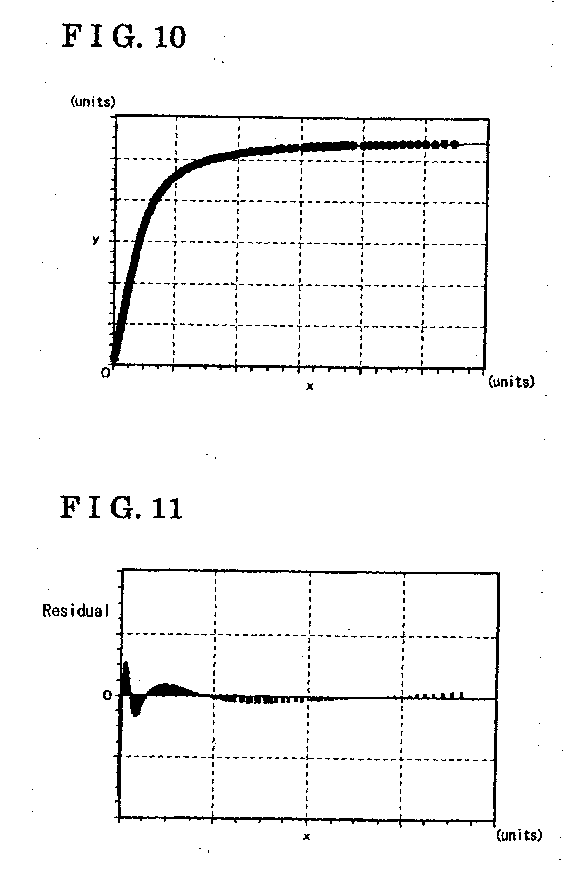

On the other hand, the distortion correcting portion CP corrects the distortion by means of not the above mentioned polynomial but the MMF model (Morgan-Mercer-Flodin Model). The MMF model is known as a curve model and indicated by a formula $y = (ab + cx^d)/(b + x^d)$. Because the MMF model is explained in Non-patent document 5, specific explanations of the MMF model will be skipped here. An experimental result of the correction of the distortion in the wide-angle lens design data formula by use of the MMF model is shown in Fig.10, and Fig.11 illustrates an enlarged view of Fig.10.

According to the distortion correcting portion CP in this embodiment, it is clearly indicated that, comparing the result in Fig.11 to the result in Fig.8 and Fig.9, in which the wide-angle lens design data formula by use of the MMF model is accurately corrected than tenth order polynomial approximation, residuals between a real value and an approximated curve becomes small without enhancing a calculate amount. In this embodiment, plural MMF models can be set and stored in the memory as a table, and an appropriate MMF model can be selected from them.

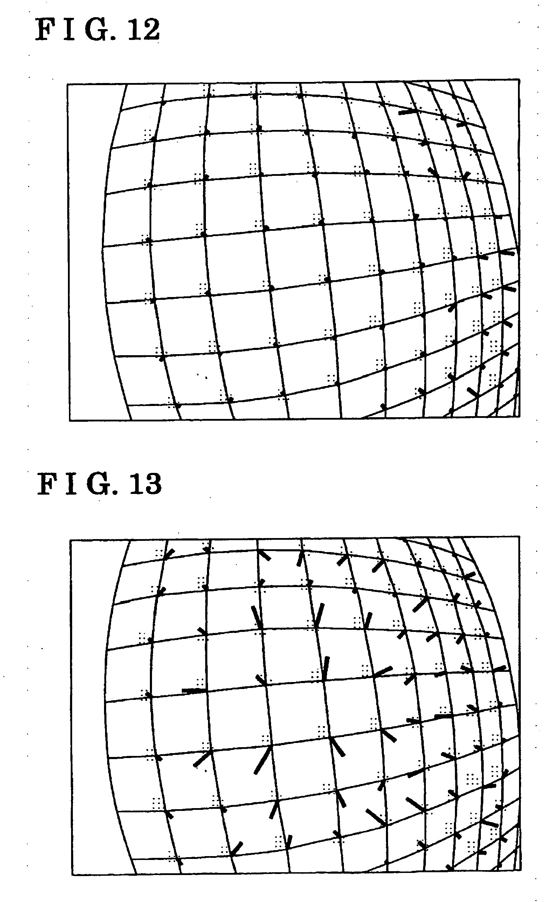

Further, Fig.12 and Fig.13 illustrates examples of experiment using a calibration chart having a tetragonal lattice pattern in a known size. Specifically, the calibration chart includes a lattice pattern in a known three-dimension so that a relative position and dimension of each lattice can be shown in Fig.12 and Fig.13. It is known that, a coordinate value of a lattice point shown in an image captured by a camera is detected, and on the basis of input information of a group of the lattice points and the three-dimension in the calibration chart, an inside parameter of the camera such as a magnification of a lens of a camera and a distortion coefficient can be calibrated. In such calibration process, a polynomial model is applied in order to calculate an assumed distortion correction parameter, however, instead of the polynomial model, the MMF model is used in this embodiment.

A ray from each point on the lattice point in the calibration chart, the point reflecting toward an optical center of the camera, extends on the image because of the effect of an actual distortion characteristic. If the distortion coefficient is correctly calibrated, the ray toward each point on the lattice point in the calibration chart logically passes through an identical point that corresponds to the lattice point on the image. However, because the actual distortion coefficient has errors, the ray from each point on the lattice point in the calibration chart does not pass through the identical point that corresponds to the lattice point on the image, and pass through a point that is deviate from the identical point. Such deviation is called a residual. Fig.12 indicates residuals in the image when MMF model is used, and Fig.13 indicates residuals in the image when a polynomial approximation is applied. In each of Fig.12 and Fig.13, the residuals are represented in pixcels, which are enlarged twenty times. It is clear from Fig.12 and Fig.13 that the amount of the residuals is less in Fig.12, in which the MMF model is used, than the amount of the residuals in Fig.13.

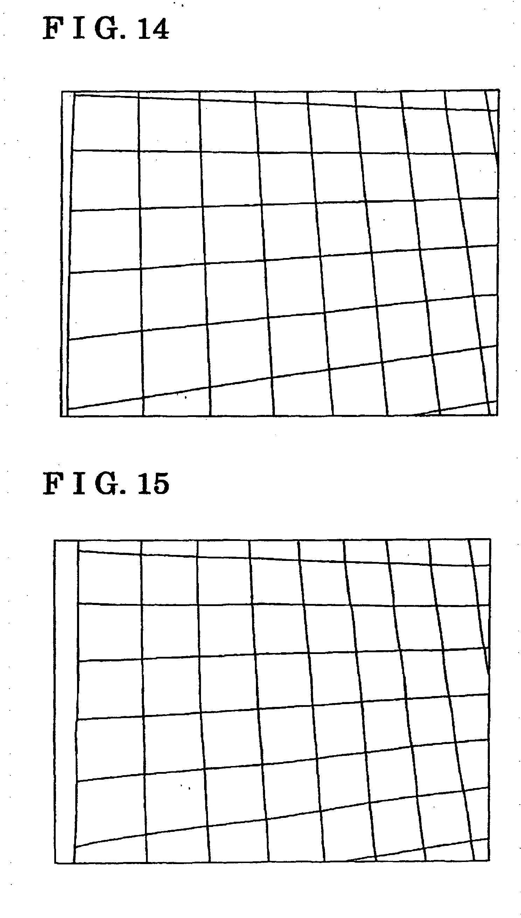

Further, Fig.14 illustrates a result in which the distorted input is corrected by use of the MMF model, and Fig. 15 illustrates a result in which the distorted input is corrected by use of the polynomial approximation. As shown in Fig. 15, a line that is supposed to be shown in a straight line is illustrated in a wavy line, which means that the level of the accuracy in the distortion correction is low. On the other hand, in Fig.14, it can be observed that the level of the accuracy in the distortion correction is relatively high.

Thus, when the detector for driving lane on road surface employs the MMF model in order to correct the distortion coefficient of the camera lens, the detector can recognize the white line on the road surface in a manner where an accuracy of detecting the road curvature can be enhanced, and further an accuracy of detecting the position of the vehicle relative to the white line and a postural relationship between the vehicle and the white line can also be enhanced.

Further, when the parking assist device having the wide-angle lens employs the MMF model in order to correct the distortion coefficient of the camera lens, and the parking assist device superimposes the estimated locus EL of the vehicle in a rear direction, the displayed trace and the estimated locus EL can be similar. Further, when the system for recognizing an obstacle employs the MMF model in order to correct the distortion coefficient of the camera lens, an accuracy in detecting a position, a size and a posture of the obstacle can be enhanced.

In the embodiment, the image processing device is mounted on the movable body such as a vehicle; however, it is not limited to such configuration. In order to improve the performance of image processing, the image processing device can be applied to any device having, for example a device having a wide-angle lens and can also be applied to various kinds of image processing systems.

According to the embodiment, because the image processing method corrects the distortion in the image, which is captured by the capturing means, by use of the MMF model; the image processing such as the correction of the distortion can be appropriately conducted. For example, even when the image is captured by the capturing means such as a camera having a wide-angle lens, the distortion in the image can be appropriately corrected.

Specifically, the image processing method can appropriately conduct the image processing, for example, correcting the distortion in the image which is captured by the capturing means being mounted on the movable body.

The principles, preferred embodiment and mode of operation of the present invention have been described in the foregoing specification. However, the invention which is intended to be protected is not to be construed as limited to the particular embodiments disclosed. Further, the embodiments described herein are to be regarded as illustrative rather than restrictive. Variations and changes may be made by others, and equivalents employed, without departing from the sprit of the present invention. Accordingly, it is expressly intended that all such variations, changes and equivalents which fall within the spirit and scope of the present invention as defined in the claims, be embraced thereby.

An image processing method processes a captured image, which is captured by a capturing means (VD, CM), characterized in that the image processing method comprises an image processing process (VA) for generating a corrected captured image by correcting a distortion appearing within the captured image by use of a MMF model.

## Claims

1. An image processing method for processing a captured image, which is captured by a capturing means (VD, CM), **characterized in that** the image processing method comprises an image processing process (VA) for generating a corrected captured image by correcting a distortion appearing within the captured image by use of a MMF model.

2. The image processing method according to Claim 1 further includes a displaying process (DS) for displaying the corrected captured image that the distortion is corrected by use of the MMF model.

3. The image processing method according to Claim 2, further includes an estimating process for generating an estimated image, and distortion correcting process for correcting the estimated image by use of the MMF model, the corrected estimated image is superimposed on a background image appearing within the captured image.

4. The image processing method according to Claim 1, wherein, the capture means is mounted on a movable body, the distortion in a geometrical shape indicates an estimated locus (EL) of the movable body (MB), and the distortion is corrected by use of the MMF model.

5. The image processing method according to Claim 4, wherein an image, in which the geometrical shape is corrected by the MMF model, is displayed by the displaying process.

6. An image processing device for processing a captured image captured by a capturing means (VD, CM) including an image processing method for processing the captured image, **characterized in that** the image processing device comprises an image processing means (VA) for generating a corrected captured image by correcting a distortion appearing within the captured image by use of a MMF model.

7. The image processing device according to Claim 6 further including a displaying means (DS) for displaying the corrected captured image which the distortion is corrected by use of the MMF model.

8. The image processing device according to Claim 7, wherein an estimated image is corrected by use of the MMF model and superimposed on a background image appearing within the captured image, which is captured by the capturing means, and an image, in which the corrected estimated image is superimposed on the background image, is displayed by the displaying means.

**9.** The image processing device according to Claim 6, wherein, the capture means is mounted on a movable body, the image processing method corrects by use of the MMF model a distortion in a geometrical shape, which indicates an estimated locus of the movable body.

**10.** The image processing device according to Claim 9 further including the displaying means for displaying an image, in which the distortion of the geometrical shape indicating the estimated locus of the movable body is corrected by use of the MMF model.

# FIG. 1

```
┌─────────────────────────────────────────────┐
│          Image processing means VA           │
│                                              │
┌──────────┐   │        ┌──────────────┐        │   ┌──────────────┐
│Capturing │   │        │  Distortion  │        │   │ Displaying   │
│means VD  │───┼───────▶│  correcting  │────────┼──▶│ means DS     │
└──────────┘   │        └──────────────┘        │   └──────────────┘
               │               ▲                │
               │        ┌──────────────┐        │
               │        │  MMF model   │        │
               │        └──────────────┘        │
└─────────────────────────────────────────────┘
```

# FIG. 2

```
                    ┌──────────────────────────────────────────┐
                    │       Image processing means VA          │
                    │                                          │
┌────────────────────┐  │   ┌──────────────────┐              │   ┌──────────────┐
│Capturing means VD  │──┼─▶ │   Distortion     │──────────────┼──▶│ Displaying   │
└────────────────────┘  │   │  compensating    │              │   │ means DS     │
┌────────────────────┐  │   └──────────────────┘              │   │              │
│Moving object MB    │──┼─▶ ┌──────────┐   ┌──────────────┐   │   └──────────────┘
└────────────────────┘  │   │Estimating│   │  Distortion  │   │
                        │   │means ES  │──▶│  correcting  │───┼──▶
                        │   └──────────┘   └──────────────┘   │
                    └──────────────────────────────────────────┘
```

# FIG. 3

```
Camera CM ──→ Buffer        ──→ Sync          ──→ A/D ──→         Frame
               circuit VB       separator SY                      memory FM
                                      │              ↑              ↑
                                      ↓              │              │
                                   Clock ───────────┘              │
                                   circuit CL                      │
                                                                   │
                                        ┌──────────────────────────┴──────┐
                                        │ Image data controlling    │ ～Image processing
                                        │    portion VP             │    portion VC
                                        ├───────────────────────────┤
Power    ──→ Power supply               │ Distortion correcting     │
source       circuit PW                 │    portion CP             │
                                        ├───────────────────────────┤
                                        │ Edge detecting portion EP │
                                        ├───────────────────────────┤
                                        │ Straight line detecting   │
                                        │    portion SP             │
                                        ├───────────────────────────┤
                                        │ Adjacent lane borderline  │
                                        │ determining portion LP    │
                                        └─────────────┬─────────────┘
                                                      ↕
Signal   ──→ Input interface  ──→ System controlling ──→ Output interface ──→ Output
from vehicle  circuit IN           portion SC            circuit OU          signal
```

EP 1 655 698 A1

# FIG. 4

Point A

# FIG. 5

Point B

# F I G. 6

Point B in
distorted image

y

Point A in
undistorted image

x

D

D'

# F I G. 7

(units)

y

O

x

(units)

F I G. 8

(units)

y

0                          x                    (units)

F I G. 9

Residual

0

x                    (units)

# F I G. 10

# F I G. 11

F I G. 12

F I G. 13

# F I G. 14

# F I G. 15

# F I G. 16 A    F I G. 16 B

Distorted image of
tetragonal shaped
test chart

Ideal image of
tetragonal shaped
test chart

# F I G. 17

Lattice points of distorted image

# F I G. 18

Lattice points of ideal image

F I G. 19

**EP 1 655 698 A1**

European Patent Office

**EUROPEAN SEARCH REPORT**

Application Number

EP 05 02 3418

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 5 675 380 A (FLORENT ET AL) 7 October 1997 (1997-10-07) ----- | 1-9 | G06T3/00 |
| A | WO 03/043308 A (KONINKLIJKE PHILIPS ELECTRONICS N.V; CHENG, TZU-HUNG) 22 May 2003 (2003-05-22) ----- | 1-9 | |
| A | ALAMUS R. ET AL.: "On the Accuracy and Performance of the Geomobil System" ISPRS 2004, 12 July 2004 (2004-07-12), - 23 July 2004 (2004-07-23) XP002372167 Istanbul, Turkey * the whole document * ----- | 1-9 | |
| D,A | ZHANG Z.: "A Flexible New Technique for Camera Calibration" MICROSOFT RESEARCH TECHNICAL REPORT MSR-TR-98-71, 2 December 1998 (1998-12-02), XP002372168 * the whole document * ----- | 1-9 | |
| A | REIS DOS SANTOS M.I. AND PORTA NOVA A.M.O.: "Statistical fitting and validation of non-linear simulation metamodels: A case study" EUROPEAN JOURNAL OF OPERATIONAL RESEARCH (PREPRINT), 4 October 2004 (2004-10-04), XP002372169 section 4 ----- | 1-9 | **TECHNICAL FIELDS SEARCHED (IPC)** G06T |
| A | TJORVE E.: "SHAPES AND FUNCTIONS OF SPECIES-AREA CURVES: A REVIEW OF POSSIBLE MODELS" JOURNAL OF BIOGEOGRAPHY, vol. 30, 2003, pages 827-835, XP002372170 * the whole document * ----- | 1-9 | |

The present search report has been drawn up for all claims

| Place of search | Date of completion of the search | Examiner |
|---|---|---|
| The Hague | 15 March 2006 | Deltorn, J-M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

19

**EP 1 655 698 A1**

## ANNEX TO THE EUROPEAN SEARCH REPORT
## ON EUROPEAN PATENT APPLICATION NO.

EP 05 02 3418

This annex lists the patent family members relating to the patent documents cited in the above-mentioned European search report.
The members are as contained in the European Patent Office EDP file on
The European Patent Office is in no way liable for these particulars which are merely given for the purpose of information.

15-03-2006

| Patent document cited in search report | | Publication date | Patent family member(s) | | Publication date |
|---|---|---|---|---|---|
| US 5675380 | A | 07-10-1997 | DE | 69526635 D1 | 13-06-2002 |
| | | | DE | 69526635 T2 | 05-12-2002 |
| | | | EP | 0720125 A1 | 03-07-1996 |
| | | | JP | 8287243 A | 01-11-1996 |
| WO 03043308 | A | 22-05-2003 | CN | 1596421 A | 16-03-2005 |
| | | | JP | 2005509961 T | 14-04-2005 |
| | | | US | 2005018175 A1 | 27-01-2005 |

EPO FORM P0459

For more details about this annex : see Official Journal of the European Patent Office, No. 12/82